# EUROPEAN PATENT SPECIFICATION

(11) **EP 0 360 860 B1**
(45) Date of publication and mention of the grant of the patent: **15.02.1995**
(21) Application number: 89904365.7
(22) Date of filing: 13.03.1989
(51) Int. Cl.: G06F 11/20, G06F 19/00, G07G 1/14

(54) **POINT OF SALE FILE RECOVERY SYSTEM AND METHOD THEREFOR**
DATEIWIEDERHERSTELLUNGSSYSTEM UND VERFAHREN FÜR VERKAUFSSTELLEN
SYSTEME ET METHODE DE RECUPERATION D'UN FICHIER ''POINT DE VENTE''

(30) Priority: 25.03.1988 JP 69962/88; 27.02.1989 US 316272
(43) Date of publication of application: 04.04.1990
(73) Proprietor: AT&T GLOBAL INFORMATION SOLUTIONS INTERNATIONAL INC., Dayton, Ohio 45479 (US)
(72) Inventor: NAITO, Jiro, Naka-gun Kanagawa (JP); ITO, Fumio, Fujisawa City Kanagawa (JP)
(74) Representative: Robinson, Robert George
(86) International application number: US8900993
(87) International publication number: WO8909453

(56) References cited:
- EP-A- 0 141 245
- EP-A- 0 187 523
- PATENT ABSTRACT OF JAPAN, VOLUME 8, NO. 183 (P-296), 23 AUGUST 1984, & JP-A-5975349 (HITACHISEISAKUSHO K.K) 28 APRIL 1984

## Description

### Technical Field

This invention relates to point of sale systems of the kind including a plurality of satellite terminals adapted to input information on sold goods and a master terminal coupled to said satellite terminals and adapted to transmit and receive sales information.

The invention also relates to a method of providing a file backup system for a point of sale operation.

### Background Art

In the field of data processing, the use of point of sale (POS) terminals has required and also has enabled rapid and accurate transfer of information from one location to another in a business operation. In the case of department stores, the sales data may be transmitted or communicated from one or more terminals throughout the store to a central computer or processing unit. A filing system may be provided to maintain inventory and price data on the huge number of items that are sold in the store. The filing system and the control therefor provide means for reading and updating data and information regarding the constantly changing inventory and prices for the overall operation.

U.S. Patent No. 4,468,750 discloses a point of sale system including a primary media terminal, a plurality of satellite terminals constructed and operated in a similar manner to the media terminal, and a backup media terminal. A diskette inserted into the primary media terminal received and stores data from the satellite terminals. In the event of a malfunction of the primary media terminal, the backup media terminal may be converted into the primary media terminal for the system by transferring the diskette from the faulty primary media terminal and inserting it into the backup media terminal. The conversion of the backup media terminal to the primary media terminal is thus a relatively slow and cumbersome manual operation, and interrupts the normal operational usage of the system.

The document EP-A-0 187 523 discloses a point of sale system including a main controller and a plurality of POS terminals. The main controller includes a price look-up (PLU) table and informs the terminals of article data in response to a PLU table enquiry from a terminal. The system also includes a backup controller which constantly intercepts communications between the main controller and the terminals, such that the backup controller updates its PLU table in he same way as the main controller. Thus when the main controller malfunctions the backup controller can execute PLU table functions with an up-to-date PLU table.

The document EP-A-0 141 245 discloses a data processing system including a plurality of processors and a memory arranged as a plurality of pairs of memory blocks. Each pair of memory blocks is normally accessed synchronously in parallel with continuous self-checking during read operations. If an error is detected in one of the blocks, the block is disconnected and only the other block is utilized for read/write operations. Before return to normal operation, during a write operation the same information is written into both blocks at the same address. Also, preferably during one or more long interruptions of read/write operations, an address generator is actuated to provide sequentially, to both blocks, all addresses thereof such that information is read out of the first block and written into corresponding addresses in the second block.

### Disclosure of the Invention

It is an object of the present invention to provide a point of sale system of the kind specified, which reduces the chances of the system being inoperative.

Therefore, according to one aspect of the present invention, there is provided a point of sale system as set forth in claim 1.

According to another aspect of the present invention there is provided a method of providing a file back up system in a point of sale system as set forth in claim 4.

It will be appreciated that a system or method according to the invention has an advantage over a system wherein, when a file fails during operation of the system, the system has to be stopped to recover the file, even though the fault causing the failure has been repaired. furthermore, when such a system continues to operate with only one file operative, it is possible that this file may develop a fault or fail, causing the entire system to shut down. In contrast, the system and method according to the invention enables system operation to continue even during file recovery after a fault has been repaired.

### Brief Description of the Drawings

One embodiment of the present invention will now be described by way of example, with reference to the accompanying drawings, in which:
Fig. 1 is a block diagram showing the structure of the file backup system according to a preferred embodiment of the present invention;
Fig. 2 is a block diagram showing the structures of the file devices illustrated in Fig. 1;
Fig. 3 is a flow chart illustrating the operation of the main file device;
Fig. 4 is a flow chart illustrating the operation of the backup file device; and
Fig. 5 is a flow chart illustrating the backup file recovering operation.

### Best Mode for Carrying Out the Invention

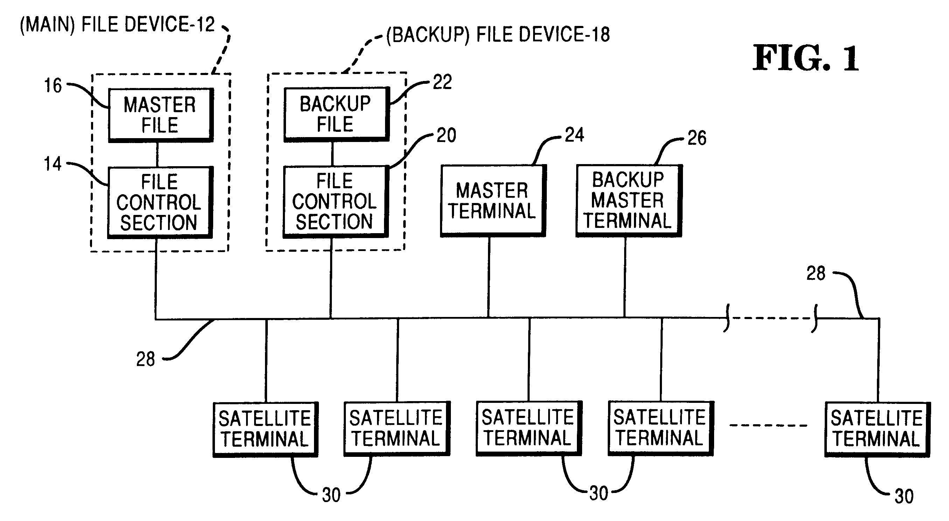

Fig. 1 is a block diagram showing the structure of a preferred embodiment of the present invention. In the drawing, a main file device 12 includes a file controller or file control section 14 and a master file 16 in which point of sale (POS) data is stored. A backup file device 18 includes a file controller or file control section 20 and a backup file 22 in which POS data is stored. The file controller 20 has the same structure as file controller 14 and backup file 22 is the same as the master file 16. A master terminal 24 and a backup master terminal 26 are coupled by means of an in-house communication line or circuit 28. A plurality of satellite terminals 30 each consisting of a POS terminal such as an electronic cash register (ECR) or the like are coupled to the terminals 24 and 26 and to the file devices 12 and 18. All the elements 12, 18, 24, 26 and 30 are connected together via the in-house communication line or circuit 28.

The master terminal 24 and the backup master terminal 26 are constructed in the same manner as that of a conventional master terminal and a backup master terminal except that file control sections for controlling the POS data file are not included in the terminals 24 and 26. Each of the satellite terminals 30 is constructed in the same manner as that of a conventional POS terminal such as an ECR or the like. In this connection, although the backup master terminal 26 is provided in this embodiment, the provision thereof is optional. Further, although only one backup file device 18 is provided in this embodiment, a plurality of such backup file devices may be provided. In addition, a structure is also possible wherein the file control devices 14 and 20 and the master file 16 and the backup file 22 are provided in the master terminal 24 and in the backup master terminal 26 and no separate file devices 12 and 18 are provided. However, in such a structure, a response to the request from each satellite terminal 30 may be delayed and thus prolong the operation.

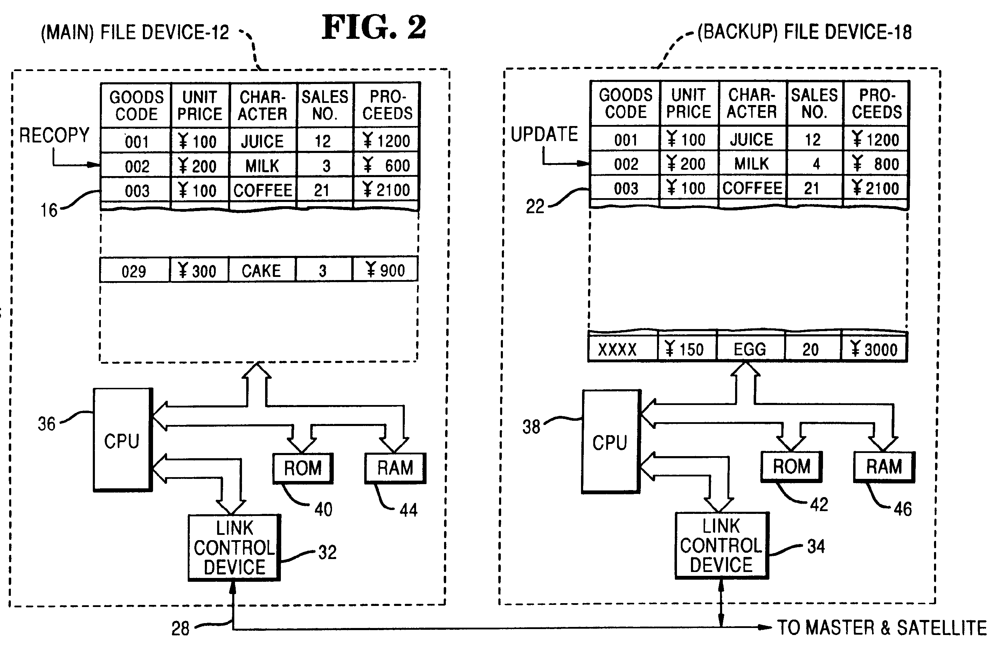

As shown in Fig. 2, the main file device 12 and the backup file device 18, respectively, consist of link control devices 32 and 34, central processing units (CPU) 36 and 38, read only memories (ROM) 40 and 42, random access memories (RAM) 44 and 46 and the master file 16 and the backup file 22. The CPU 36, the ROM 40, the RAM 44 and the link control device 32 correspond to the file control section 14 in Fig. 1. The main file device 12 and the backup file device 18 include identical elements and are constructed in exactly the same manner. Alternatively, the files 16 and 22 may be respectively included within the RAMs 44 and 46. Each of the link control devices 32 or 34 is a line control device for controlling the in-house communication line or circuit 28. The operations of the main file device 12 and the backup file device 18, which have been described in relation to Fig. 1, are respectively controlled by the CPUs 36 and 38 in accordance with processing procedures respectively stored in the ROMs 40 and 42.

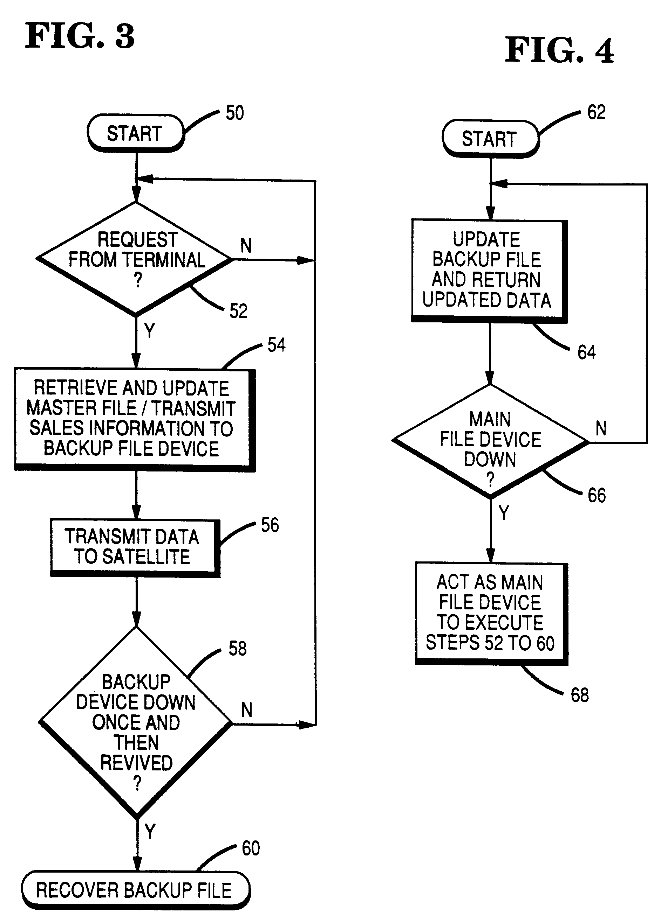

The normal operation of the file backup system according to the embodiment shown in Fig. 1 and the backup operation thereof in case of failure of the backup file device 18 will be described in relation to Figs. 1, 2, 3 and 4. Fig. 3 is a flow chart illustrating the simplified operation of the file control section 14 of the main file device 12 and Fig. 4 is a flow chart illustrating the simplified operation of the file control section 20 of the backup file device 18.

The power source is turned on to start the operation (block 50). The main file device 12 sequentially polls the individual terminals 24, 26 and 30 within the system in a predetermined cycle to confirm the presence or absence of the data transmission or receiving request from the terminal (block 52).

When a customer buys goods, the codes thereof and the number of goods sold are input from a bar code reader (not shown) or a keyboard (not shown) of any one of the master terminal 24, or the backup terminal 26 or the satellite terminal 30. The goods codes and the number of sold goods (sales information) thus input are sent over the line or circuit 28 to the main file device 12 when the main file device 12 polls the respective terminals 24, 26 or 30. The main file device 12 receives the sales information from the terminals 24, 26 or 30 and transmits such information to the backup file device 18 and simultaneously reads the master file 16 based on the goods code (block 54). The main file device 12 reads out the goods information from the master file 16, updates the sales information or the like relating to the concerned goods code (block 54) and then transmits the goods data (prices or the like) corresponding to the goods code to the respective terminal 24, 26 or 30 from which the sales information has been transmitted (block 56). The terminal 24, 26 or 30 which receives the transmitted goods data from the main file device 12 registers the goods thus sold based on the received goods data.

Then, the main file device 12 checks to see whether or not the backup file device 18 has been down once and then revived (block 58). If the backup file device 18 has not been down or is not maintained in the down state, the flow returns to block 52 in Fig. 3 to repeat the same processing. In case the backup file device 18 has been down once and then revived, the flow goes to block 60 in Fig. 3 to recover the backup file data for the recovery of the backup file 22 in the backup file device 18.

On the other hand and as noted from the start 62 in Fig. 4, the backup file device 18 which receives the sales information from the main file device 12 updates the backup file 22 in the same manner as the main file device 12 and then transmits the data thus updated to the main file device 12 (block 64). The main file device 12 compares the updated data received from the backup file device 18 with the updated data of its own to see whether or not the backup file 22 is correctly updated (block 64). Then, the flow goes to block 66 to confirm whether or not the main file device 12 is down (block 66). In case the main file device 12 is down, the backup file device 18 acts as the main file device to control the data communication with each terminal 24, 26 or 30 (block 68), and executes the steps 52 to 60 in Fig. 3.

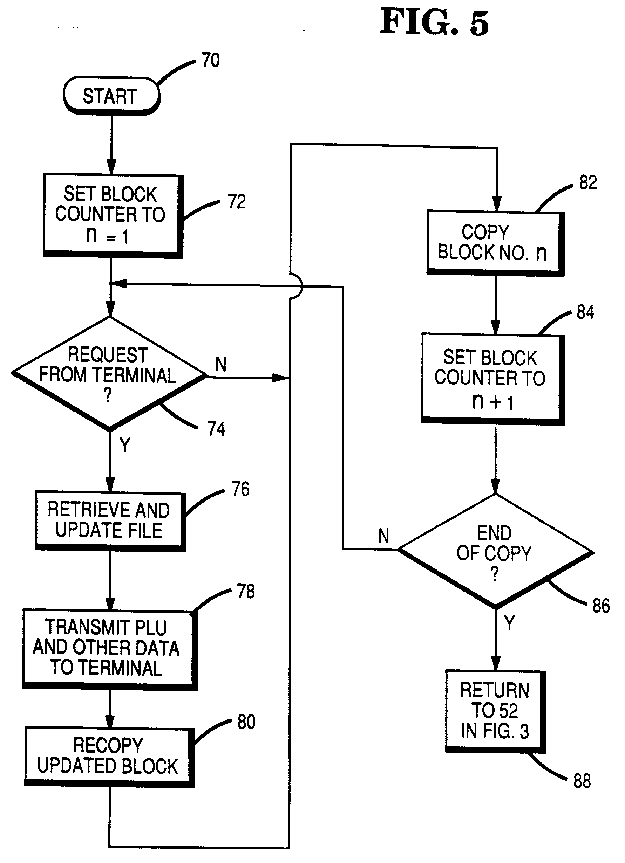

Next, the operation relating to the backup file recovering process in block 60 of Fig. 3 will be described with reference to Fig. 5. Fig. 5 is a flow chart illustrating the backup file recovering procedure of the main file device for the re-preparation of the backup file during the operation of the system.

It is assumed that the repairing of the original main file device 12 is completed after the original main file device 12 has been down and the power source is turned on (block 70). Now, the file device 18 is in operation as the main file device, so that such main file device 18 senses the completion of the repairing of the original main file device 12 (block 58) to perform the backup file recovering operation (block 60), as shown in Fig. 3.

In a first step in Fig. 5, a block counter, arranged as a copy block in order to copy the contents in the backup file 22 into the file 16, is set to n=1 (block 72). Then, a check is made to see whether or not a request is sent from a terminal (block 74) and, if not, the flow goes to block 82 in which the block n(n=1), indicated by the block counter, is copied from the backup file 22 into the file 16. Then, the block counter is set to n+1 (block 84) and a check is made to see whether or not all the contents in the backup file 22 have been copied into the file 16 (block 86). If all the contents have been copied, the flow returns to block 74 to repeat the same process.

Next, the case in which a request is sent from a terminal 24, 26 or 30 will be described with reference to Figs. 2 and 5.

Assume that the request for the goods code "002" is sent from a terminal 30 when the block counter is set to n=30. The main file device 18 senses the request from the terminal 30 in block 74 and goes to block 76 (Fig. 5) wherein the master file 22 is retrieved to update the sales information of the goods code "002" such as the sales number (the number of sold goods) and the proceeds, as in the case in block 54 in Fig. 3. Now, assuming that one carton of milk is sold, the sales number changes from 3, which is the previous sales number, to "4", as shown in Fig. 2, and the proceeds change from ¥600 to ¥800. Then, as noted in Fig. 5, the main file device 18 transmits the data such as the unit price "¥200" to the terminal 30 from which the request is sent (block 78) and thereafter the main file device 18 re-copies the block of the requested goods code "002" in the file 22, just updated, into the file 16 which is being copied in the file device 12 (block 80). Then, the main file device 18 goes to block 82 to copy the block (n=30) and repeat the copying operation, as mentioned above. At the completion of copying of all blocks, the main file device 18 goes from block 86 to block 88 and then returns to block 52 in Fig. 3. The file device 12 acts as the backup file device to repeat the steps in blocks 64, 66 and 68 in Fig. 4.

As has been described above, the present invention is constructed such that even if one of the files is destroyed, the main file can copy the contents in the master file into the file thus destroyed in the up-to-date state, while retrieving and updating the file in response to the request from each terminal 24, 26 or 30 and controlling the data communication therewith. In this manner, the file backup system in which the contents in the master file can be copied into the backup file, even during the operation of the system, can be accomplished and the backup file device can be put into operation immediately after the completion of repairing of the machine without stopping the system. Accordingly, the present invention is effective to provide a file backup system that reduces the chances of the system being down.

It is thus seen that herein shown and described is a file backup system that enables rapid response to requests from terminals. When one of the file devices has failed or is down, another file device becomes the main file device and copies the content of the one file device to maintain the operation.

## Claims

1. A point of sale system, including a plurality of satellite terminals (30) and a master terminal (24) said terminals (24,30) being adapted to transmit information on sold goods and a corresponding request, and to receive in response sales information, and two file devices (12,18) including respective point of sale data files (16,22) and respective file control sections (14,20) wherein said file devices (12,18) are arranged such that either of said file devices (12,18) is adapted to operate as a main file device to control point of sale data file reading and updating operations and data communication within the system and wherein the other file device (12,18) is adapted to operate normally as a backup file device but to operate as a main file device when the main file device has failed, wherein the file control section (14) of the main file device (12) is adapted to read and update its respective point of sale data file (16) in response to information on sold goods received from said terminals (24,30), to transmit sales information in response to said request from one of the terminals, and to control data communication between said satellite terminals (30), said master terminal (24), the backup file device (18) and itself, characterized in that said main file device (12) is adapted to control the updating of said point of sale data file (22) of the backup file device by receiving information on goods sold from said terminals (24,30) and transmitting such information to the backup file device (18) the backup file device (18) upon receiving such information updating its respective point of sale data file in the same manner as the main file device, said main file device (12) being further adapted, when the point of sale data file of the backup file device has failed, to copy the contents of its own point of sale data file into the point of sale data file of the backup device that has failed while simultaneously performing normal point of sale file reading and updating operations and controlling data communication in the system, counter means being provided to maintain control of the point of sale data file copying operation, the file control section of the main file device using said counter means to control the copying of successive blocks from the point of sale data file of the main file device to the point of sale data file of the backup file device that has failed and to interrupt the copying in response to information on sold goods and corresponding request from one of said terminals (24,30) to permit point of sale data file reading and updating operation in the main file device and the copying of the updated information from the point of sale data file of the main file device to point of sale data file of the backup file device that has failed.

2. A point of sale system according to claim 1, characterized in that said file devices (12,18) are arranged and constructed such that either one of said file devices (12,18) operates as the main file device to restore the other file device (12,18) to operate as a backup file device to maintain operation of the system.

3. A point of sale system according to claim 1, characterized by an in-house communication line (28) adapted to couple said master terminal (24) and said satellite terminals (30) to said file devices (12,18).

4. A method of providing a file back up system in a point of sale system having a plurality of satellite terminals (30) coupled to a master terminal (24), said terminals (24,30) being adapted to transmit information on sold goods and a corresponding request, and to receive in response sales information, including the steps of: providing two file devices (12,18) including respective point of sale data files (16,22) and respective file control sections (14,20), constructing said file devices (12,18) such that either one of said file devices operates as a main file device to control point of sale data file reading and updating operations and data communication within the system, wherein the other file device normally operates as a backup file device but operates as a main file device when said main file device has failed, and wherein the file control section (14) of the main file device (12) is adapted to read and update its respective point of sale data file (16) in response to information on sold goods received from said terminals (24,30), to transmit sales information in response to said request from one of the terminals, and to control data communication between said satellite terminals (30), said master terminal (24), the backup file device (18) and itself, characterized by the steps of controlling the main file device to update the point of sale data file of the backup file device by receiving information on goods sold from said terminals (24,30) and transmitting such information to the backup file device (18), the backup file device (18) upon receiving such information updating its respective point of sale data file in the same manner as the main file device, and constructing said main file device such that, when said point of sale data file of the backup file device has failed, such main file device performs copying of the contents of its own point of sale data file into said point of sale data file of the backup file device that failed while simultaneously performing normal point of sale data file reading and updating operations and controlling operation of data communication in the system, said copying operating under the control of counter means and including the steps of constructing the file control section of the main file device such that it uses said counter means for controlling the copying of successive blocks from the point of sale data file of the main file device to the point of sale data file of the backup file device that has failed, and interrupts the copying in response to information on sold goods and corresponding request from one of said terminals (24,30) to permit point of sale data file reading and updating operation in the main file device and the copying of the updated information from the point of sale data file of the main file device to the point of sale data file of the backup file device that has failed.

## Patentansprüche

1. Ein Verkaufsstellensystem, umfassend eine Vielzahl von Satellit-Terminals (30) und ein Hauptterminal (24), wobei die Terminals (24, 30) geeignet sind, Informationen über verkaufte Waren und eine entsprechende Anfrage zu übermitteln und als Antwort Verkaufsinformationen zu empfangen, und zwei Dateivorrichtungen (12, 18), die jeweils Verkaufsstellendatendateien (16, 22) und Dateisteuerteile (14, 20) aufweisen, wobei die Dateivorrichtungen (12, 18) so ausgebildet sind, daß jede der Dateivorrichtungen (12, 18) geeignet ist als Hauptdateivorrichtung betrieben zu werden, um Lese- und Aktualisierungsvorgänge einer Verkaufsstellendatendatei und die Datenverbindung im System zu steuern, und wobei die andere Dateivorrichtung (12, 18) geeignet ist, um gewöhnlich als Sicherungsdateivorrichtung betrieben zu werden, aber als Hauptdateivorrichtung dient, wenn die Hauptdateivorrichtung ausgefallen ist, wobei das Dateisteuerteil (14) der Hauptdateivorrichtung (12) geeignet ist, seine jeweilige Verkaufsstellendatendatei (16) unter Ansprechen auf von den Terminals (24, 30) empfangene Informationen über verkaufte Waren zu lesen und zu aktualisieren und Verkaufsinformationen als Antwort auf diese Anfrage von einem der Terminals zu übertragen, sowie die Datenverbindung zwischen den Satellit-Terminals (30), dem Hauptterminal (24), der Sicherungsdateivorrichtung (18) und sich selbst zu steuern,
dadurch gekennzeichnet, daß
die Hauptdateivorrichtung (12) geeignet ist, das Aktualisieren der Verkaufsstellendatendatei (22) der Sicherungsdateivorrichtung durch Empfangen von Informationen über verkaufte Waren von den Terminals (24, 30) und Übertragen solcher Informationen an die Sicherungsdateivorrichtung (18) zu steuern, wobei die Sicherungsdateivorrichtung (18) nach Empfang solcher Informationen ihre jeweilige Verkaufsstellendatendatei in derselben Weise wie die Hauptdateivorrichtung aktualisiert und die Hauptdateivorrichtung (12) weiterhin geeignet ist, den Inhalt ihrer eigenen Verkaufsstellendatendatei in die Verkaufsstellendatendatei der ausgefallenen Sicherungsvorrichtung zu kopieren, wenn die Verkaufsstellendatendatei der Sicherungsdateivorrichtung -ausgefallen ist, während gleichzeitig gewöhnliche Lese- und Aktualisierungsvorgänge der Verkaufsstellendatei und die Steuerung der Datenverbindung in dem System ausgeführt werden, sowie Zähleinrichtungen vorgesehen sind, um die Steuerung des Kopiervorgangs der Verkaufsstellendatendatei aufrechtzuerhalten, wobei das Dateisteuerteil der Hauptdateivorrichtung diese Zähleinrichtungen verwendet, um das Kopieren aufeinanderfolgender Blöcke aus der Verkaufsstellendatendatei der Hauptdateivorrichtung in die Verkaufsstellendatendatei der ausgefallenen Sicherungsdateivorrichtung zu steuern und um das Kopieren unter Ansprechen auf Informationen über verkaufte Waren und entsprechende Anfrage von einem der Terminals (24, 30) zu unterbrechen, um einen Lese- und Aktualisierungsvorgang einer Verkaufsstellendatendatei in der Hauptdateivorrichtung und das Kopieren der aktualisierten Informationen aus der Verkaufsstellendatendatei der Hauptdateivorrichtung in die Verkaufsstellendatendatei der ausgefallenen Sicherungsdateivorrichtung zu gestatten.

2. Ein Verkaufsstellensystem nach Anspruch 1, dadurch gekennzeichnet, daß die Dateivorrichtungen (12, 18) so angeordnet und aufgebaut sind, daß eine der Dateivorrichtungen (12, 18) als Hauptdateivorrichtung dient, um die andere Dateivorrichtung (12, 18) wiederherzustellen, so daß sie als Sicherungsdateivorrichtung dient, um den Betrieb des Systems aufrechtzuerhalten.

3. Ein Verkaufsstellensystem nach Anspruch 1, gekennzeichnet durch eine Hausverbindungsleitung (28), die geeignet ist, das Hauptterminal (24) und die Satellit-Terminals (30) mit den Dateivorrichtungen (12, 18) zu koppeln.

4. Ein Verfahren zur Bereitstellung eines Dateisicherungssystems in einem Verkaufsstellensystem, das eine Vielzahl von an ein Hauptterminal (24) angekoppelte Satellit-Terminals (30) umfaßt, wobei die Terminals (24, 30) geeignet sind, Informationen über verkaufte Waren und eine entsprechende Anfrage zu übertragen, und als Antwort Verkaufsinformationen zu empfangen, umfassend die Schritte: Bereitstellen zweier Dateivorrichtungen (12, 18), die jeweils Verkaufsstellendatendateien (16, 22) und Dateisteuerteile (14, 20) aufweisen, wobei die Dateivorrichtungen (12, 18) so ausgebildet sind, daß eine der Dateivorrichtungen geeignet ist als eine Hauptdateivorrichtung betrieben zu werden, um Lese- und Aktualisierungsvorgänge einer Verkaufsstellendatendatei und die Datenverbindung im System zu steuern, wobei die andere Dateivorrichtung gewöhnlich als Sicherungsdateivorrichtung betrieben wird, aber als Hauptdateivorrichtung dient, wenn die Hauptdateivorrichtung ausgefallen ist, und wobei das Dateisteuerteil (14) der Hauptdateivorrichtung (12) geeignet ist, jeweils seine diesbezüglichen Verkaufsstellendatendateien (16) als Antwort auf empfangene Informationen über verkaufte Waren von den Terminals (24, 30) zu lesen und zu aktualisieren, und um Verkaufsinformationen als Antwort auf diese Anfrage von einem der Terminals zu übertragen, sowie die Datenverbindung zwischen den Satellit-Terminals (30), dem Hauptterminal (24), der Sicherungsdateivorrichtung (18) und sich selbst zu steuern, gekennzeichnet durch die Schritte Steuern der Hauptdateivorrichtung, um die Verkaufsstellendatendatei der Sicherungsdateivorrichtung durch von den Terminals (24, 30) empfangene Informationen über verkaufte Waren zu aktualisieren und solche Informationen an die Sicherungsdateivorrichtung (18) zu übertragen, wobei die Sicherungsdateivorrichtung (18) nach Empfang solcher Informationen ihre jeweilige Verkaufsstellendatendatei in derselben Weise wie die Hauptdateivorrichtung aktualisiert, und Ausbilden der Hauptdateivorrichtung derart, daß die Hauptdateivorrichtung das Kopieren des Inhalts ihrer eigenen Verkaufsstellendatendatei in die Verkaufsstellendatendatei der ausgefallenen Sicherungsdateivorrichtung durchführt, wenn die Verkaufsstellendatendatei der Sicherungsvorrichtung ausgefallen ist, während gleichzeitig gewöhnliche Lese- und Aktualisierungsvorgänge von Verkaufsstellendatendateien und die Steuerung der Datenverbindung in dem System ausgeführt werden, wobei der Kopiervorgang unter der Steuerung von Zähleinrichtungen betrieben wird und die Schritte umfaßt: Ausbilden des Dateisteuerteils der Hauptdateivorrichtung derart, daß es die Zähleinrichtungen zur Steuerung des Kopierens aufeinanderfolgender Blöcke aus der Verkaufsstellendatendatei der Hauptdateivorrichtung in die Verkaufsstellendatendatei der ausgefallenen Sicherungsdateivorrichtung benutzt und das Kopieren unter Ansprechen auf Informationen über verkaufte Waren und entsprechende Anfrage von einem der Terminals (24, 30) unterbricht, um einen Lese- und Aktualisierungsvorgang einer Verkaufsstellendatendatei in der Hauptdateivorrichtung und das Kopieren von aktualisierten Informationen aus der Verkaufsstellendatendatei der Hauptdateivorrichtung in die Verkaufsstellendatendatei der ausgefallenen Sicherungsdateivorrichtung zu gestatten.

## Revendications

1. Un système point de vente, comportant une pluralité de terminaux satellites (30) et un terminal maître (24), lesdits terminaux (24, 30) étant adaptés pour transmettre des informations relatives aux marchandises vendues et une demande correspondante, et pour recevoir, en réponse, des informations relatives aux ventes, et deux dispositifs de fichiers (12, 18) comportant des fichiers de données points de vente respectifs (16, 22) et des sections de commande de fichiers respectives (14, 20) dans quoi lesdits dispositifs de fichiers (12, 18) sont arrangés de façon à ce que l'un ou l'autre desdits dispositifs de fichiers (12, 18) soit adapté pour servir de dispositif de fichier principal pour commander les opérations de lecture et de mise à jour de fichiers de données points de vente et la communication des données dans le système et dans quoi l'autre dispositif de fichiers (12, 18) est adapté pour fonctionner normalement en tant que dispositif de fichier de sauvegarde mais pour servir de dispositif de fichier principal lorsque le dispositif de fichier principal a eu une défaillance, dans quoi la section de commande de fichier (14) du dispositif de fichier principal (12) est adaptée pour lire et mettre à jour son fichier de données points de vente respectif (16) en réponse aux informations relatives aux marchandises vendues reçues à partir desdits terminaux (24, 30), pour transmettre des informations relatives aux ventes en réponse à ladite demande de l'un des terminaux et pour commander la communication des données entre lesdits terminaux satellites (30), ledit terminal maître (24), le dispositif de fichier de sauvegarde (18) et lui-même, caractérisé en ce que ledit dispositif de fichier principal (12) est adapté pour commander la mise à jour dudit fichier de données points de vente (22) du dispositif de fichier de sauvegarde en recevant des informations relatives aux marchandises vendues à partir desdits terminaux (24, 30) et en transmettant ces informations au dispositif de fichier de sauvegarde (18), le dispositif de fichier de sauvegarde (18), à la réception de ces informations, mettant à jour son fichier de données points de vente respectif de la même manière que le dispositif de fichier principal, ledit dispositif de fichier principal (12) étant encore adapté, lorsque le fichier de données points de vente du dispositif de fichier de sauvegarde a eu une défaillance, pour copier le contenu de son propre fichier de données points de vente dans le fichier de données points de vente du dispositif de sauvegarde qui a eu une défaillance tout en effectuant des opérations de lecture et de mise à jour normales du fichier point de vente et en commandant la communication des données dans le système, un moyen compteur étant fourni pour maintenir la commande de l'opération de copie du fichier de données point de vente, la section de commande de fichier du dispositif de fichier principal utilisant ledit moyen compteur pour commander la copie des blocs successifs du fichier de données points de vente du dispositif de fichier principal au fichier de données points de vente du dispositif de fichier de sauvegarde qui a eu une défaillance et pour interrompre la copie en réponse aux informations relatives aux marchandises vendues et à la demande correspondante de l'un desdits terminaux (24, 30) pour permettre l'opération de lecture et de mise à jour dudit fichier de données points de vente dans le dispositif de fichier principal et la copie des informations à jour du fichier de données points de vente du dispositif de fichier principal au fichier de données points de vente du dispositif de fichier de sauvegarde qui a eu une défaillance.

2. Un système point de vente conformément à la revendication 1, caractérisé en ce que lesdits dispositifs de fichiers (12, 18) sont arrangés et construits de sorte que l'un ou l'autre desdits fichiers serve de dispositif de fichier principal pour rétablir l'autre dispositif de fichier (12, 18) afin de servir de dispositif de fichier de sauvegarde pour permettre au système de continuer de fonctionner.

3. Un système point de vente conformément à la revendication 1, caractérisé par une ligne de communication sur place (28) adaptée pour accoupler ledit terminal maître (24) et lesdits terminaux satellites (30) auxdits dispositifs de fichiers (12, 18).

4. Une méthode pour fournir un système de sauvegarde de fichier dans un système point de vente ayant une pluralité de terminaux satellites (30) accouplés à un terminal maître (24), lesdits terminaux (24, 30) étant adaptés pour transmettre des informations relatives aux marchandises vendues et une demande correspondante, et pour recevoir, en réponse, des informations relatives aux ventes, y compris les étapes de la fourniture de deux dispositifs de fichiers (12, 18) comportant des fichiers de données points de vente respectifs (16, 22) et des sections de commande de fichier respectives (14, 20), de la construction desdits dispositifs de fichiers (12, 18) de façon à ce que l'un ou l'autre desdits dispositifs de fichiers serve de dispositif de fichier principal; pour commander les opérations de lecture et de mise à jour du fichier de données points de vente et la communication des données dans le système, dans quoi l'autre dispositif de fichier sert normalement de dispositif de fichier de sauvegarde mais sert de dispositif de fichier principal lorsque le dispositif de fichier principal a eu une défaillance, et dans quoi la section de commande de fichier (14) du dispositif de fichier principal (12) est adaptée pour lire et mettre à jour son fichier de données points de vente respectif (16) en réponse à des informations relatives aux marchandises vendues reçues dedits terminaux (24, 30), pour transmettre des informations relatives aux ventes en réponse à ladite demande de l'un des terminaux et pour commander la communication des données entre lesdits terminaux satellites (30), ledit terminal maître (24), le dispositif de fichier de sauvegarde (18) et lui-même, caractérisée par les étapes de la commande du dispositif de fichier principal pour mettre à jour le fichier de données points de vente du dispositif de fichier de sauvegarde en recevant des informations relatives aux marchandises vendues à partir desdits terminaux (24, 30) et en transmettant ces informations au dispositif de fichier de sauvegarde (18), le dispositif de fichier de sauvegarde (18), à la réception de ces informations, mettant à jour son fichier de données points de vente respectif de la même manière que le dispositif de fichier principal, et de la construction dudit dispositif de fichier principal de sorte que, lorsque ledit fichier de données points de vente du dispositif de fichier de sauvegarde a eu une défaillance, ce dispositif de fichier principal réalise la copie du contenu de son propre fichier de données points de vente dans ledit fichier de données points de vente du dispositif de fichier de sauvegarde qui a eu une défaillance tout en réalisant les opérations normales de lecture et de mise à jour du fichier de données points de vente et en commandant l'opération de communication des données dans le système, ladite copie étant réalisée sous la commande du moyen compteur, et comportant les étapes de la construction de la section de commande de fichier du dispositif de fichier principal de sorte qu'elle utilise ledit moyen compteur pour commander la copie de blocs successifs du fichier de données points de vente du dispositif de fichier principal au fichier de données points de vente du dispositif de fichier de sauvegarde qui a eu une défaillance, et interrompt la copie en réponse à des informations relatives aux marchandises vendues et à une demande correspondante de l'un desdits terminaux (24, 30) pour permettre l'opération de lecture et de mise à jour du fichier de données points de vente dans le dispositif de fichier principal et la copie des informations mises à jour à partir du fichier de données points de vente du dispositif de fichier principal au fichier de données points de vente du dispositif de fichier de sauvegarde qui a eu une défaillance.
